(19) Europäisches Patentamt / European Patent Office / Office européen des brevets

(11) **EP 4 397 637 A1**

(12) **EUROPEAN PATENT APPLICATION**
published in accordance with Art. 153(4) EPC

(43) Date of publication:
**10.07.2024 Bulletin 2024/28**

(21) Application number: **22864519.8**

(22) Date of filing: **29.08.2022**

(51) International Patent Classification (IPC):
$C03C\ 10/04$ ^(2006.01)     $C03B\ 32/02$ ^(2006.01)
$C03C\ 21/00$ ^(2006.01)

(52) Cooperative Patent Classification (CPC):
**C03C 21/00; C03B 32/02; C03C 3/083;
C03C 3/085; C03C 3/097; C03C 10/00;
C03C 10/0027; C03C 21/002**

(86) International application number:
**PCT/JP2022/032466**

(87) International publication number:
**WO 2023/032937 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2021  JP 2021143384**

(71) Applicant: **AGC INC.**
**Chiyoda-ku,**
**Tokyo 1008405 (JP)**

(72) Inventors:
• **KANEHARA, Kazuki**
  **Tokyo 100-8405 (JP)**
• **KUROIWA, Yutaka**
  **Tokyo 100-8405 (JP)**
• **AKIBA, Shusaku**
  **Tokyo 100-8405 (JP)**

(74) Representative: **Müller-Boré & Partner**
**Patentanwälte PartG mbB**
**Friedenheimer Brücke 21**
**80639 München (DE)**

(54) **CRYSTALLIZED GLASS, METHOD FOR PRODUCING SAME, CHEMICALLY STRENGTHENED GLASS, AND ELECTRONIC DEVICE**

(57)     The present invention relates to crystallized glass in which the crystals contained in the largest amount on a mass basis are lithium disilicate crystals and, in the lithium disilicate crystals, the proportion of Li ions occupying Li ion sites is less than 95%.

EP 4 397 637 A1

**Description**

TECHNICAL FIELD

The present invention relates to a glass ceramic, a method for producing the same, a chemically strengthened glass, and an electronic device.

BACKGROUND ART

A cover glass or the like of a mobile terminal is required to have a strength so that the glass does not easily crack even when the mobile terminal is dropped, and therefore, a chemically strengthened glass is widely used. The chemically strengthened glass is a glass obtained by causing ion exchange, by a method such as immersing the glass in a molten salt such as sodium nitrate, between alkali ions contained in the glass and alkali ions contained in the molten salt and having a larger ion radius, thereby forming a compressive stress layer on a surface layer portion of the glass.

The glass ceramic is obtained by precipitating crystals in the glass, and is harder and less likely to be damaged than an amorphous glass containing no crystal. Further, the glass ceramic capable of being chemically strengthened can have high strength while preventing fracturing as compared with an amorphous glass. For example, Patent Literature 1 describes that a glass ceramic containing a predetermined crystal can be chemically strengthened by ion exchange.

In an electronic device such as a communication device such as a mobile phone, a smart phone, a personal digital assistant, or a Wi-Fi device, a surface acoustic wave (SAW) device, a radar component, or an antenna component, a signal frequency has been increased in order to increase a communication capacity, a communication speed, or the like. In recent years, use of 5th generation mobile communication system (5G) as a new communication system using a higher frequency band has been expected. In a high frequency band used in 5G, the cover glass may interfere with radio wave transmission and reception, and a cover glass having excellent radio wave transmittance is required for an electronic device compatible with 5G. That is, a cover glass used for an electronic device such as a mobile terminal is required to be excellent in both strength and radio wave transmittance.

CITATION LIST

PATENT LITERATURE

Patent Literature 1: JP2020-33262A

SUMMARY OF INVENTION

TECHNICAL PROBLEM

However, in a glass ceramic capable of being chemically strengthened in the related art, a strength thereof can be improved by chemical strengthening, but a characteristic value that affects the radio wave transmittance, such as a relative dielectric constant and a dielectric loss tangent, is likely to be relatively large, and the glass ceramic in the related art is insufficient in terms of the radio wave transmittance. Therefore, it is very difficult to obtain a glass implementing both strength and radio wave transmittance. In addition, the glass ceramic described in Patent Literature 1 can improve the strength by chemical strengthening, but does not particularly focus on the radio wave transmittance, and is insufficient in terms of radio wave transmittance.

In view of the above problems, an object of the present invention is to provide a glass ceramic that has excellent strength by chemical strengthening and excellent radio wave transmittance. In addition, another object of the present invention is to provide a chemically strengthened glass excellent in both strength and radio wave transmittance.

SOLUTION TO PROBLEM

In order to improve the radio wave transmittance, it is preferable to make the relative dielectric constant and the dielectric loss tangent relatively small. Further, the radio wave transmittance of the glass ceramic may be affected by radio wave transmittance of a crystal contained therein. As a result of intensive studies, the present inventors have found that a lithium disilicate-based crystal is very excellent in radio wave transmittance in terms of particularly low relative dielectric constant. On the other hand, the present inventors have also known that the dielectric loss tangent of the lithium disilicate-based crystal may vary depending on a state of the crystal. Specifically, the present inventors have also known that a value of the dielectric loss tangent of the lithium disilicate-based crystal can be reduced by reducing a ratio of Li ions in Li ion sites of the lithium disilicate-based crystal. The present inventors have found that accordingly, the radio wave transmittance can be further improved, and have completed the present invention.

That is, the present invention relates to the following 1 to 11.

1. A glass ceramic, in which

a crystal contained in the largest amount on a mass basis is a lithium disilicate-based crystal, and
a ratio of Li ions in Li ion sites of the lithium disilicate-based crystal is less than 95%.

2. The glass ceramic according to 1, having a light transmittance in terms of a thickness of 0.7 mm of 85% or more in a wavelength range of 400 nm to 1,000 nm.

3. The glass ceramic according to 1 or 2, having a haze value in terms of a thickness of 0.7 mm of less than 5% in a wavelength range of 400 nm to 1,000 nm.

4. The glass ceramic according to 1 or 2, in which
a total value of a relative dielectric constant Dk at 10 GHz and 20°C and a value obtained by multiplying a dielectric loss tangent tan $\delta$ at 10 GHz and 20°C by 100 is 7.5 or less.

5. The glass ceramic according to 1 or 2, having a relative dielectric constant Dk at 10 GHz and 20°C of 5.8 or less.

6. The glass ceramic according to 1 or 2, including, in terms of molar percentage based on oxides:

55% to 85% of $SiO_2$;
1% to 5% of $Al_2O_3$;
0% to 5.0% of $B_2O_3$;
0.5% to 5.0% of $P_2O_5$;
0% to 5.0% of $TiO_2$;
0% to 5.0% of $ZrO_2$;
15% to 25% of $Li_2O$;
0% to 5.0% of $Na_2O$;
0% to 5.0% of $K_2O$; and
0% to 5.0% in total of one or more selected from MgO, CaO, SrO, and BaO.

7. The glass ceramic according to 6, including, in terms of molar percentage based on an oxide:
0.1% to 5.0% of $Na_2O$.

8. A method for producing the glass ceramic according to 1 or 2, the method including:

subjecting an amorphous glass to at least a one-stage heat treatment, in which
a temperature of each of the heat treatment is 750°C or lower, and
a heating rate to a treatment temperature and a cooling rate from the treatment temperature are 0.5 °C/min or more in each of the heat treatment.

9. A chemically strengthened glass including a compressive stress layer on a surface thereof,

having a surface compressive stress value of 50 MPa or more, and
being the glass ceramic according to 1 or 2.

10. The chemically strengthened glass according to 9, having a sheet shape, in which
a ratio of an alkaline metal element is different between a surface layer and a center in a thickness direction.

11. An electronic device including the glass ceramic according to 1.

ADVANTAGEOUS EFFECTS OF INVENTION

The glass ceramic according to the present invention can be chemically strengthened. In addition, in the glass ceramic according to the present invention, a ratio of Li ions in Li ion sites of a lithium disilicate-based crystal is small. Accordingly, the glass ceramic according to the present invention has excellent strength by chemical strengthening and excellent radio wave transmittance.

The chemically strengthened glass according to the present invention is a glass ceramic, and has a small ratio of Li ions in Li ion sites of a lithium disilicate-based crystal, thereby being excellent in both strength and radio wave transmittance.

DESCRIPTION OF EMBODIMENTS

In the present description, "to" indicating a numerical range is used in the sense of including the numerical values set forth before and after the "to" as a lower limit value and an upper limit value. Unless otherwise specified, "to" in the present description is used in the same meaning.

In the present description, a "chemically strengthened glass" refers to a glass after a chemical strengthening treatment, and a "glass for chemical strengthening" refers to a glass before a chemical strengthening treatment.

In the present description, "base composition of a chemically strengthened glass" is glass composition of the glass for chemical strengthening. In the chemically strengthened glass, glass composition at a depth of 1/2 of a sheet thickness t is the base composition of the chemically strengthened glass except for a case where an extreme ion exchange treatment is performed.

In the present description, the glass composition is expressed in terms of molar percentage based on oxides unless otherwise specified, and mol% is simply expressed as "%".

In the present description, "substantially free of" means that a component has a content equal to or less than an impurity level contained in raw materials and the like, that is, the component is not intentionally added. Specifically, a content thereof is less than 0.1 mol%, for example.

In the present description, a "stress profile" represents a compressive stress value with a depth from a glass surface as a variable. In addition, a "depth of compressive stress layer (DOL)" is a depth at which the compressive stress value (CS) is zero. An "internal tensile stress value (CT)" refers to a tensile stress value at a depth of 1/2 of the sheet thickness t of the glass.

The stress profile in the present description can be measured using a scattered light photoelastic stress meter (for example, SLP-1000 manufactured by Orihara Industrial Co., Ltd.). In the scattered light photoelastic stress meter, the measurement accuracy in the vicinity of a sample surface may decrease due to an influence of surface scattering. However, for example, when a compressive stress is generated only by ion exchange between lithium ions in the glass and external sodium ions, the compressive stress value represented by a function of the depth follows a complementary error function, and therefore, a stress value of the surface can be obtained by measuring an internal stress value. In a case of not following the complementary error function, a surface portion is measured by another method, for example, a measurement method with a surface stress meter.

In the present description, an "amorphous glass" and a "glass ceramic" may be collectively referred to as a "glass". In the present description, the "amorphous glass" refers to a glass in which a diffraction peak indicating a crystal is not observed by powder X-ray diffraction.

In the present description, the "glass ceramic" refers to a glass obtained by subjecting the "amorphous glass" to a heat treatment to precipitate crystals, in which crystals are precipitated in the glass. In the present description, the "glass ceramic" refers to a glass in which a diffraction peak indicating a crystal is observed by X-ray diffraction (XRD). The X-ray diffraction measurement can be performed by, for example, a measurement method using CuKα rays in a range where 2θ is 10° to 80°.

In the present description, the crystal precipitated in the glass ceramic can be identified by powder X-ray diffraction (PXRD) measurement. Further, in order to obtain a more accurate crystal structure, it is preferable to perform Rietveld analysis. According to the Rietveld analysis, quantitative analysis of a crystal phase and an amorphous phase and structural analysis of a crystal phase may be performed. The Rietveld method is described in "Crystal Analysis Handbook" edited by the Crystallographic Society of Japan "Crystal Analysis Handbook" Editing Committee (Kyoritsu Shuppan, 1999, p492-499). That is, in the present description, a content, a degree of crystallinity, and the like of each crystal in the glass ceramic are obtained by, for example, Rietveld analysis of an XRD pattern obtained by powder X-ray diffraction (PXRD) measurement.

In the present description, a "light transmittance" refers to a parallel light transmittance in a wavelength of 400 nm to 1,000 nm. In addition, a "haze value" refers to a value measured in accordance with JIS K3761:2000 using a C light source.

(Glass Ceramic)

(Crystal)

In a glass ceramic according to the present embodiment (hereinafter also referred to as "present glass ceramic"), a crystal contained in the largest amount on a mass basis is a lithium disilicate-based crystal. In the lithium disilicate-based crystal, a ratio of Li ions in Li ion sites is less than 95%.

The present glass ceramic contains a lithium disilicate-based crystal. Specific examples of the lithium disilicate-based crystal include lithium disilicate ($Li_2Si_2O_5$), $Li_{2-x}Na_xSi_2O_5$, and $Li_2Si_{2-3x}Al_{4x}O_5$.

The radio wave transmittance of the glass ceramic is improved because the present glass ceramic contains a lithium disilicate-based crystal. From the viewpoint of improving the radio wave transmittance, the content of the lithium disilicate-based crystal in the present glass ceramic is preferably 20 mass% or more, more preferably 25 mass% or more, still more preferably 30 mass% or more, particularly preferably 35 mass% or more, further particularly preferably 40 mass% or more, even more preferably 45 mass% or more, still even more preferably 50 mass% or more, and most preferably 55 mass% or more. On the other hand, such a content is preferably 90 mass% or less, more preferably 85 mass% or less, still more preferably 80 mass% or less, particularly preferably 75 mass% or less, even more preferably 70 mass% or less, and most preferably 65 mass% or less, from the viewpoint of maintaining transparency. The content of the lithium disilicate-based crystal is preferably 20 mass% to 90 mass%, more preferably 25 mass% to 85 mass%, further preferably 30 mass% to 80 mass%, still more preferably 35 mass% to 75 mass%, particularly preferably 40 mass% to 70 mass%, further particularly preferably 45 mass% to 65 mass%, even more preferably 50 mass% to 65 mass%, and most preferably 55 mass% to 65 mass%.

A fact that the glass ceramic contains a lithium disilicate-based crystal can be confirmed from that a peak attributed to a (002) plane is present between $2\theta = 36°$ to $37°$ in the XRD pattern. In addition, the content of the lithium disilicate-based crystal is determined by the Rietveld analysis described above.

In the present glass ceramic, the crystal contained in the largest amount on a mass basis is a lithium disilicate-based crystal.

In the lithium disilicate-based crystal, the ratio of Li ions in Li ion sites is less than 95%. It is considered that when the ratio of Li ions in the Li ion site is less than a specific amount, the Li ion site in which Li ions are not present contains at least one of a hole and an element (heteroelement) other than Li. The heteroelement is not particularly limited, but examples thereof include elements whose valence is close to that of Li, and specific examples thereof include Na and Al.

The ratio of Li ions in the Li ion site is determined by the Rietveld analysis described above. In the present description, a unit "%" of the ratio of Li ions in Li ion sites means "atom%".

The ratio of Li ions in the Li ion site is less than 95%, preferably less than 90%, more preferably less than 85%, still more preferably less than 80%, particularly preferably less than 75%, further particularly preferably less than 70%, even more preferably less than 65%, and most preferably less than 60%, from the viewpoint of improving the radio wave transmittance. On the other hand, the ratio of Li ions in the Li ion site is preferably 30% or more, more preferably 35% or more, still more preferably 40% or more, particularly preferably 45% or more, and even more preferably 50% or more, from the viewpoint of maintaining a crystal structure. The ratio of Li ions in the Li ion site is preferably 30% or more and less than 90%, more preferably 35% or more and less than 85%, further preferably 40% or more and less than 80%, still more preferably 45% or more and less than 75%, particularly preferably 50% or more and less than 70%, further particularly preferably 50% or more and less than 65%, and even more preferably 50% or more and less than 60%.

In the present glass ceramic, a crystal contained in the largest amount on a mass basis is a lithium disilicate-based crystal, and in the lithium disilicate-based crystal, a ratio of Li ions in Li ion sites is less than 95%, so that the radio wave transmittance is excellent. The reason for this is considered as follows.

In order to improve the radio wave transmittance, it is preferable to make the relative dielectric constant and the dielectric loss tangent relatively small. Further, the radio wave transmittance of the glass ceramic may be affected by radio wave transmittance of a crystal contained therein.

As a result of intensive studies, the present inventors have found that a lithium disilicate-based crystal is excellent in radio wave transmittance in terms of particularly low relative dielectric constant. On the other hand, the present inventors have also known that the dielectric loss tangent of the lithium disilicate-based crystal may vary depending on a state of the crystal. Specifically, the present inventors have also known that a value of the dielectric loss tangent of the lithium disilicate-based crystal can be reduced by reducing a ratio of Li ions in Li ion sites of the lithium disilicate-based crystal.

For this reason, in the crystal structure of the lithium disilicate-based crystal, fluctuation of atoms when an electric field is applied to the Li ion site is the largest, which is considered to be a cause of increasing the dielectric loss tangent. That is, when a hole or an element other than Li (heteroelement) is substituted, dissolved, and contained in such a Li ion site, it is possible to suppress a vibration of Li ions as an entire crystal. Accordingly, it is presumed that the dielectric loss tangent of the lithium disilicate-based crystal and the glass ceramic containing the crystal becomes small.

Since in the present glass ceramic, as a crystal, a crystal contained in the largest amount on a mass basis is a lithium disilicate-based crystal, so that the relative dielectric constant is prone to be small. Further, in the lithium disilicate-based crystal, the ratio of Li ions in Li ion sites is small, so that the dielectric loss tangent is prone to be small. Accordingly, the present glass ceramic is excellent in radio wave transmittance as compared with the related art.

The present glass ceramic may arbitrarily contain crystals other than the lithium disilicate-based crystal (hereinafter also referred to as other crystals). The other crystals may be one type or a plurality of types. The other crystals are not particularly limited, but examples thereof include a petalite ($LiAlSi_4O_{10}$)-based crystal, a $SiO_2$-based crystal, a lithium metasilicate ($Li_2SiO_3$)-based crystal, and a eucryptite ($LiAlSiO_4$)-based crystal.

As the other crystals, a petalite ($LiAlSi_4O_{10}$)-based crystal is preferable from the viewpoint of improving the transparency of the glass ceramic. A fact that the glass ceramic contains, for example, a petalite-based crystal can be confirmed from that a peak attributed to the (002) plane is present between $2\theta = 25°$ to $26°$ in the XRD pattern.

The present glass ceramic may not contain other crystals.

When the present glass ceramic contains other crystals, specifically, for example, the preferred content thereof for each type of crystal is preferably 50 mass% or less, more preferably 45 mass% or less, still more preferably 40 mass% or less, particularly preferably 35 mass% or less, even more preferably 30 mass% or less, and most preferably 25 mass% or less, from the viewpoint of improving the radio wave transmittance. The content of the other crystals, for each type of crystal, is preferably 0 mass% or more, more preferably 5 mass% or more, still more preferably 10 mass% or more, and particularly preferably 15 mass% or more, from the viewpoint of improving the transparency. The content of the other crystals, for each type of crystal, is preferably 0 mass% to 50 mass%, more preferably 5 mass% to 45 mass%, further preferably 10 mass% to 40 mass%, still more preferably 15 mass% to 35 mass%, particularly preferably 15 mass% to 30 mass%, and further particularly preferably 15 mass% to 25 mass%.

In addition, a total content of the other crystals is preferably 50 mass% or less, more preferably 45 mass% or less, still more preferably 40 mass% or less, particularly preferably 35 mass% or less, even more preferably 30 mass% or less, and most preferably 25 mass% or less, from the viewpoint of improving the radio wave transmittance. The total content of the other crystals is preferably 0 mass% or more, more preferably 5 mass% or more, still more preferably 10 mass% or more, and particularly preferably 15 mass% or more, from the viewpoint of improving the transparency. The total content of the other crystals is preferably 0 mass% to 50 mass%, more preferably 5 mass% to 45 mass%, further preferably 10 mass% to 40 mass%, still more preferably 15 mass% to 35 mass%, particularly preferably 15 mass% to 30 mass%, and further particularly preferably 15 mass% to 25 mass%.

From the viewpoint of improving the radio wave transmittance, a difference obtained by subtracting a ratio (mass%) of a content of a crystal contained in the second largest amount on a mass basis in the present glass ceramic from a ratio (mass%) of the content of the lithium disilicate-based crystal is preferably 10 mass% or more, more preferably 15 mass% or more, still more preferably 20 mass% or more, particularly preferably 25 mass% or more, even more preferably 30 mass% or more, still even more preferably 35 mass% or more, and most preferably 40 mass% or more. On the other hand, such a difference is preferably 60 mass% or less, more preferably 55 mass% or less, and still more preferably 50 mass% or less, from the viewpoint of improving the transparency. Such a difference is preferably 10 mass% to 60 mass%, more preferably 15 mass% to 55 mass%, further preferably 20 mass% to 50 mass%, still more preferably 25 mass% to 50 mass%, particularly preferably 30 mass% to 50 mass%, further particularly preferably 35 mass% to 50 mass%, and even more preferably 40 mass% to 50 mass%.

In a case where the present glass ceramic does not contain other crystals, the "ratio (mass%) of a content of a crystal contained in the second largest amount on a mass basis" is 0 mass%.

The degree of crystallinity of the present glass ceramic is preferably 50 mass% or more, more preferably 55 mass% or more, still more preferably 60 mass% or more, particularly preferably 65 mass% or more, even more preferably 70 mass% or more, still even more preferably 75 mass%, and most preferably 80 mass% or more, from the viewpoint of improving the radio wave transmittance and the viewpoint of increasing the strength. The degree of crystallinity is preferably 95 mass% or less, and more preferably 90 mass% or less, from the viewpoint of enhancing the transparency. The degree of crystallinity is preferably 50 mass% to 95 mass%, more preferably 55 mass% to 95 mass%, further preferably 60 mass% to 95 mass%, still more preferably 65 mass% to 95 mass%, particularly preferably 70 mass% to 95 mass%, further particularly preferably 75 mass% to 95 mass%, and even more preferably 80 mass% to 90 mass%.

In the present glass ceramic, a ratio of an amorphous phase is preferably 50 mass% or less, more preferably 45 mass% or less, still more preferably 40 mass% or less, particularly preferably 35 mass% or less, even more preferably 30 mass% or less, still even more preferably 25 mass% or less, and most preferably 20 mass% or less, from the viewpoint of improving the radio wave transmittance. The ratio of the amorphous phase is preferably 5 mass% or more, and more preferably 10 mass% or more, from the viewpoint of enhancing the transparency. The ratio of the amorphous phase is preferably 5 mass% to 50 mass%, more preferably 5 mass% to 45 mass%, further preferably 5 mass% to 40 mass%, still more preferably 5 mass% to 35 mass%, particularly preferably 5 mass% to 30 mass%, further particularly preferably 5 mass% to 25 mass%, and even more preferably 10 mass% to 20 mass%. Here, in the present description, the amorphous phase refers to a value obtained by subtracting a total sum (mass%) of the ratios of crystal amounts obtained by Rietveld analysis from 100 mass%.

In the present glass ceramic, an average particle size of a precipitated crystal is preferably 5 nm to 80 nm. The average particle size of the precipitated crystal is preferably 80 nm or less, more preferably 70 nm or less, further preferably 60 nm or less, still more preferably 50 nm or less, particularly preferably 40 nm or less, and most preferably 30 nm or less, from the viewpoint of improving the transparency. The average particle size of the precipitated crystal is, for example, preferably 5 nm or more, more preferably 6 nm or more, still more preferably 7 nm or more, particularly preferably 8 nm or more, even more preferably 9 nm or more, and most preferably 10 nm or more, in order to increase the strength. The average particle size of the precipitated crystal is determined from a transmission electron microscope (TEM) image. The average particle size of the precipitated crystal can be estimated from a scanning electron microscope (SEM) image.

(Composition of Glass Ceramic)

Glass composition of the present glass ceramic is the same as glass composition of the amorphous glass before crystallization in a production method to be described later. Therefore, preferred aspects of the glass composition of the present glass ceramic and the glass composition of the amorphous glass are the same. Here, the composition of the glass ceramic in the present description refers to the total composition of the crystal phase and the amorphous phase of the glass ceramic. In addition, the glass composition of the glass ceramic is determined by subjecting the glass ceramic to a heat treatment at a temperature equal to or higher than a melting point and analyzing the vitrified glass. An example of the analysis method is a fluorescent X-ray analysis method.

The glass composition of the present glass ceramic is not particularly limited, but an example of a preferred aspect is as follows. In the glass composition of the present glass ceramic, a lower limit of a preferred content of a non-essential component is 0%.

The present glass ceramic is preferably a lithium aluminosilicate glass containing $SiO_2$, $Al_2O_3$, and $Li_2O$. Since the lithium aluminosilicate glass contains lithium ions which are alkali ions having the smallest ion radius, a chemically strengthened glass having a preferred stress profile is easily obtained by a chemical strengthening treatment in which ion exchange is performed using various molten salts.

In addition, from the viewpoint of allowing the Li ion site of the lithium disilicate-based crystal to contain a heteroelement to reduce the ratio of Li ions, it is preferable that the glass composition contains an element whose valence is close to that of Li, such as Na or Al.

Hereinafter, the glass composition of the present glass ceramic will be described more specifically.

$SiO_2$ is a component that constitutes the lithium disilicate-based crystal, and is an essential component. $SiO_2$ is a component that constitutes a glass network and is also a component that improves chemical durability. A content of $SiO_2$ is preferably 55% to 85%. The content of $SiO_2$ is preferably 55% or more, more preferably 57.5% or more, further preferably 60% or more, still more preferably 62.5% or more, particularly preferably 65% or more, further particularly preferably 66% or more, even more preferably 67% or more, still even more preferably 68% or more, yet still even more preferably 69% or more, and most preferably 70% or more, from the viewpoint of precipitating the lithium disilicate-based crystal and the viewpoint of improving the chemical durability. The content of $SiO_2$ is preferably 85% or less, more preferably 82.5% or less, further preferably 80% or less, still more preferably 79% or less, particularly preferably 78% or less, further particularly preferably 77% or less, even more preferably 76% or less, still even more preferably 75% or less, and most preferably 74% or less, in order to improve the meltability during glass production.

$Al_2O_3$ is an effective component from the viewpoint of improving ion exchange performance during chemical strengthening and increasing the surface compressive stress after strengthening. $Al_2O_3$ is also a component that improves the chemical durability. In addition, Al is an element that may be present as a heteroelement in the Li ion site of the lithium disilicate-based crystal. A content of $Al_2O_3$ is preferably 1% to 5%. The content of $Al_2O_3$ is preferably 1% or more, more preferably 1.5% or more, still more preferably 2% or more, particularly preferably 2.5% or more, even more preferably 3% or more, still even more preferably 3.5% or more, and most preferably 4% or more, in order to improve the chemical durability and in order to improve chemical strengthening properties. The content of $Al_2O_3$ is preferably 5% or less, more preferably 4.9% or less, still more preferably 4.8% or less, particularly preferably 4.7% or less, and even more preferably 4.6% or less, from the viewpoint of suppressing excessive precipitation of the other crystals.

$Li_2O$ is a component that constitutes the lithium disilicate-based crystal, and is an essential component. $Li_2O$ is a component that forms a surface compressive stress by ion exchange, and is also a component that improves the meltability of the glass. By the glass ceramic containing $Li_2O$, a stress profile with a large surface compressive stress and a large compressive stress layer can be obtained by a method of ion-exchanging Li ions on the glass surface to Na ions, and further ion-exchanging Na ions to K ions. A content of $Li_2O$ is preferably 15% to 25%. The content of $Li_2O$ is preferably 15% or more, more preferably 16% or more, still more preferably 17% or more, particularly preferably 18% or more, even more preferably 19% or more, and most preferably 20% or more, from the viewpoint of precipitating a lithium disilicate-based crystal and the viewpoint of improving the strength by chemical strengthening. On the other hand, the content of $Li_2O$ is preferably 25% or less, more preferably 24.5% or less, still more preferably 24% or less, particularly preferably 23.5% or less, even more preferably 23% or less, and most preferably 22.5% or less, in order to stabilize the glass.

$Na_2O$ and $K_2O$ are not essential components, but are components that improve the meltability of the glass and are also components that improve the ion exchange performance. In order to obtain these effects, the present glass ceramic may contain at least one of $Na_2O$ and $K_2O$.

$Na_2O$ is a component that forms a surface compressive stress layer in a chemical strengthening treatment using a potassium salt, and is a component that may improve the meltability of the glass. In addition, Na is an element that may be present as a heteroelement in the Li ion site of the lithium disilicate-based crystal. A content of $Na_2O$ is preferably 0% to 5.0%, and more preferably 0.1% to 5.0%. When the present glass ceramic contains $Na_2O$, the content thereof is preferably 0.1% or more, more preferably 0.25% or more, still more preferably 0.5% or more, particularly preferably 0.75% or more, even more preferably 1.0% or more, and most preferably 1.25% or more. On the other hand, in a case where the content of $Na_2O$ is extremely large, it may be difficult to increase a compressive stress of a portion relatively deep from the surface by chemical strengthening. From such a viewpoint, the content of $Na_2O$ is preferably 5.0% or less, more preferably 4.5% or less, still more preferably 4.0% or less, particularly preferably 3.5% or less, even more preferably 3.0% or less, and most preferably 2.5% or less.

$K_2O$ is a component that improves the meltability of the glass and is also a component that improves the ion exchange performance. A content of $K_2O$ is preferably 0% to 5.0%. When the present glass ceramic contains $K_2O$, the content thereof is preferably 0% or more, and more preferably 0.1% or more, from the viewpoint of obtaining the effects. The content of $K_2O$ is preferably 5.0% or less, more preferably 4.5% or less, further preferably 3.5% or less, still more preferably 3.0% or less, particularly preferably 2.5% or less, further particularly preferably 2.0% or less, even more preferably 1.5% or less, still even more preferably 1.0% or less, and most preferably 0.5% or less, from the viewpoint of suppressing a decrease in chemical strengthening properties and chemical durability.

A total content of $Na_2O$ and $K_2O$ is preferably 0% to 10%. When the present glass ceramic contains at least one of $Na_2O$ and $K_2O$, the total content of $Na_2O$ and $K_2O$ is preferably 0.2% or more, more preferably 0.25% or more, further preferably 0.5% or more, still more preferably 0.75% or more, particularly preferably 1.0% or more, even more preferably 1.25% or more, and most preferably 1.5% or more, from the viewpoint of improving the meltability of the glass and the viewpoint of improving the ion exchange performance. The total content of $Na_2O$ and $K_2O$ is preferably 10% or less, more preferably 8% or less, still more preferably 6% or less, particularly preferably 5% or less, even more preferably 4% or less, and most preferably 3% or less, from the viewpoint of suppressing a decrease in chemical strengthening properties and chemical durability.

MgO, CaO, SrO, and BaO are not essential components, but are components that may enhance the stability of the glass and are components that may improve the chemical strengthening properties. The present glass ceramic may contain one or more selected from MgO, CaO, SrO, and BaO. A total of one or more selected from MgO, CaO, SrO, and BaO is preferably 0% to 5.0%. When these components are contained, the total of one or more selected from MgO, CaO, SrO, and BaO is preferably 0% or more, more preferably 0.25% or more, still more preferably 0.5% or more, particularly preferably 1.0% or more, further particularly preferably 1.25% or more, even more preferably 1.5% or more, still even more preferably 1.75% or more, and most preferably 2.0% or more. The total content thereof is preferably 5.0% or less, more preferably 4.5% or less, still more preferably 4.0% or less, particularly preferably 3.5% or less, even more preferably 3.0% or less, and most preferably 2.5% or less, from the viewpoint of providing a sufficient compressive stress during chemical strengthening and the viewpoint of enhancing the radio wave transmittance.

The present glass ceramic may contain MgO in order to lower the viscosity during melting or the like. A content of MgO is preferably 0% to 5.0%. When the present glass ceramic contains MgO, the content of MgO is preferably 0% or more, more preferably 0.25% or more, still more preferably 0.5% or more, particularly preferably 1.0% or more, further particularly preferably 1.25% or more, even more preferably 1.5% or more, still even more preferably 1.75% or more, and most preferably 2.0% or more. The content of MgO is preferably 5.0% or less, more preferably 4.5% or less, still more preferably 4.0% or less, particularly preferably 3.5% or less, even more preferably 3.0% or less, and most preferably 2.5% or less, from the viewpoint of suppressing deterioration of chemical strengthening properties.

CaO is a component that improves the meltability of the glass. The present glass ceramic may contain CaO. A content of CaO is preferably 0% to 5.0%. When the present glass ceramic contains CaO, the content of CaO is preferably 0% or more, more preferably 0.25% or more, still more preferably 0.5% or more, particularly preferably 1.0% or more, further particularly preferably 1.25% or more, even more preferably 1.5% or more, still even more preferably 1.75% or more, and most preferably 2.0% or more. The content of CaO is preferably 5.0% or less, more preferably 4.5% or less, still more preferably 4.0% or less, particularly preferably 3.5% or less, even more preferably 3.0% or less, and most preferably 2.5% or less, from the viewpoint of suppressing deterioration of chemical strengthening properties.

ZnO is not an essential component, but is a component that may improve the meltability of the glass. The present glass ceramic may contain ZnO. A content of ZnO is preferably 0% to 5.0%. When the present glass ceramic contains ZnO, the content of ZnO is preferably 0% or more, more preferably 0.25% or more, still more preferably 0.5% or more, particularly preferably 1.0% or more, further particularly preferably 1.25% or more, even more preferably 1.5% or more, still even more preferably 1.75% or more, and most preferably 2.0% or more. The content of ZnO is preferably 5.0% or less, more preferably 4.5% or less, still more preferably 4.0% or less, particularly preferably 3.5% or less, even more preferably 3.0% or less, and most preferably 2.5% or less, from the viewpoint of improving the weather resistance.

A total content [ZnO] + [SrO] + [BaO] of ZnO, SrO, and BaO is preferably 0% to 5.0%. ZnO, SrO, and BaO tend to deteriorate the chemical strengthening properties, and in order to facilitate chemical strengthening, [ZnO] + [SrO] + [BaO] is preferably 5.0% or less, more preferably 4.5% or less, still more preferably 4.0% or less, particularly preferably 3.5% or less, even more preferably 3.0% or less, and most preferably 2.5% or less. On the other hand, when these components are contained, the total content thereof is preferably 0.1% or more, more preferably 0.3% or more, still more preferably 0.5% or more, particularly preferably 0.7% or more, further particularly preferably 1.0% or more, and even more preferably 1.2% or more.

$P_2O_5$ is a component serving as a crystal nucleus of the lithium disilicate-based crystal. A content of $P_2O_5$ is preferably 0.5% to 5.0%. The content of $P_2O_5$ is preferably 0.5% or more, more preferably 0.6% or more, still more preferably 0.7% or more, particularly preferably 0.8% or more, further particularly preferably 0.9% or more, even more preferably 1.0% or more, still even more preferably 1.1% or more, and most preferably 1.2% or more, from the viewpoint of precipitating the lithium disilicate-based crystal. The content of $P_2O_5$ is preferably 5.0% or less, more preferably 4.5% or less, still more preferably 4.0% or less, particularly preferably 3.5% or less, further particularly preferably 3.0% or less, even more preferably 2.5% or less, still even more preferably 2.0% or less, and most preferably 1.5% or less, from the viewpoint of increasing acid resistance.

$TiO_2$ is a component that may suppress solarization of glass, and is also a component that may be a nucleus of the other crystals. A content of $TiO_2$ is preferably 0% to 5.0%. The content of $TiO_2$ is preferably 5.0% or less, more preferably 4.5% or less, particularly preferably 4.0% or less, even more preferably 3.5% or less, still even more preferably 3.0% or less, and most preferably 2.5% or less, from the viewpoint of suppressing excessive precipitation of the other crystals. The present glass ceramic may be substantially free of $TiO_2$. When the present glass ceramic contains $TiO_2$, the content of $TiO_2$ is preferably 0.1% or more, more preferably 0.3% or more, still more preferably 0.5% or more, particularly preferably 0.7% or more, even more preferably 1.0% or more, and most preferably 1.2% or more.

$ZrO_2$ is a component that may increase the surface compressive stress of the chemically strengthened glass, and is also a component that may be a nucleus of the other crystals such as a petalite-based crystal. A content of $ZrO_2$ is preferably 0% to 5.0%. The content of $ZrO_2$ is preferably 5.0% or less, more preferably 4.5% or less, further preferably 4.0% or less, still more preferably 3.5% or less, further more preferably 3.0% or less, particularly preferably 2.5% or less, further particularly preferably 2.0% or less, even more preferably 1.8% or less, still even more preferably 1.6% or less, yet still even more preferably 1.4% or less, and most preferably 1.2% or less, from the viewpoint of suppressing excessive precipitation of the other crystals. The present glass ceramic may be substantially free of $ZrO_2$. When the present glass ceramic contains $ZrO_2$, the content of $ZrO_2$ is preferably 0% or more, more preferably 0.1% or more, further more preferably 0.2% or more, still more preferably 0.3% or more, particularly preferably 0.4% or more, further particularly preferably 0.5% or more, even more preferably 0.6% or more, still even more preferably 0.7% or more, yet still even more preferably 1.0% or more, and most preferably 1.1% or more, from the viewpoint of reducing the size of the crystal.

When the present glass ceramic contains at least one of $TiO_2$ and $ZrO_2$, a ratio $(TiO_2 + ZrO_2)/P_2O_5$ of a total content of $TiO_2$ and $ZrO_2$ to the content of $P_2O_5$ is preferably 0 to 2.5. $(TiO_2 + ZrO_2)/P_2O_5$ is preferably 2.5 or less, more preferably 2.0 or less, still more preferably 1.8 or less, particularly preferably 1.6 or less, even more preferably 1.4 or less, and most preferably 1.2 or less, from the viewpoint of suppressing excessive precipitation of the other crystals. $(TiO_2 + ZrO_2)/P_2O_5$ is preferably 0 or more, more preferably 0.1 or more, still more preferably 0.2 or more, particularly preferably 0.3 or more, even more preferably 0.4 or more, still even more preferably 0.5 or more, and most preferably 0.6 or more, from the viewpoint of reducing a size of the crystal.

$B_2O_3$ is not an essential component, but is a component that may reduce embrittlement of the glass and improve crack resistance, and is a component that may improve the radio wave transmittance. The present glass ceramic may contain $B_2O_3$. A content of $B_2O_3$ is preferably 0% to 5.0%. When the present glass ceramic contains $B_2O_3$, the content thereof is preferably 0.2% or more, more preferably 0.4% or more, still more preferably 0.6% or more, particularly preferably 0.8% or more, even more preferably 1.0% or more, and most preferably 1.2% or more. The content of $B_2O_3$ is preferably 5.0% or less, more preferably 4.5% or less, still more preferably 4.0% or less, particularly preferably 3.5% or less, even more preferably 3.0% or less, and most preferably 2.5% or less, from the viewpoint of increasing the acid resistance.

$Nb_2O_5$, $Ta_2O_5$, $Gd_2O_3$, and $CeO_2$ are components that suppress solarization of the glass and are components that improve the meltability. The present glass ceramic may contain at least one of these components. A total content of these components is preferably 0% to 3%. When the present glass ceramic contains these components, a total content thereof is preferably 0.03% or more, more preferably 0.1% or more, still more preferably 0.3% or more, particularly preferably 0.5% or more, even more preferably 0.8% or more, and most preferably 1% or more. On the other hand, in a case where the content thereof is extremely large, it is difficult to increase the compressive stress value during the chemical strengthening treatment. From such a viewpoint, the total content of these components is preferably 3% or less, more preferably 2.5% or less, still more preferably 2% or less, particularly preferably 1.5% or less, even more preferably 1% or less, and most preferably 0.5% or less.

$Fe_2O_3$ is a component that may improve the solubility of the glass by absorbing heat rays. A content of $Fe_2O_3$ is preferably 0% to 0.3% in terms of weight% based on an oxide. When the glass is mass-produced using a large melting furnace, the present glass ceramic preferably contains $Fe_2O_3$. In this case, the content of $Fe_2O_3$ is preferably 0.002% or more, more preferably 0.003% or more, still more preferably 0.005% or more, particularly preferably 0.007% or more, even more preferably 0.008% or more, and most preferably 0.01% or more, in terms of weight% based on the oxide. On the other hand, in a case where $Fe_2O_3$ is excessively contained, coloring occurs, and thus the content thereof is preferably 0.3% or less, more preferably 0.04% or less, still more preferably 0.03% or less, particularly preferably 0.025% or less, even more preferably 0.02% or less, and most preferably 0.015% or less, in terms of weight% based on the oxide from the viewpoint of increasing the transparency of the glass.

Here, all iron oxides in the glass have been described as $Fe_2O_3$, but actually, Fe(III) in an oxidized state and Fe(II) in a reduced state are mixed generally. Among them, Fe(III) causes yellow coloring, Fe(II) causes blue coloring, and green coloring occurs in the glass depending on the balance therebetween.

Further, the present glass ceramic may contain a coloring component within a range not impairing the effects of the present invention. Preferred examples of the coloring component include $Co_3O_4$, $MnO_2$, $NiO$, $CuO$, $Cr_2O_3$, $V_2O_5$, $Bi_2O_3$, $SeO_2$, $CeO_2$, $Er_2O_3$, and $Nd_2O_3$.

A content of the coloring component in total is preferably 5% or less, more preferably 4% or less, still more preferably 3% or less, particularly preferably 2% or less, and even more preferably 1% or less in terms of molar percentage based on oxides. When it is desired to increase transmittance of the glass, it is preferable that the present glass ceramic is substantially free of these components.

$SO_3$, a chloride, a fluoride, or the like may be appropriately contained as a refining agent or the like during melting of the glass. $As_2O_3$ is preferably not contained. In a case where $Sb_2O_3$ is contained, a content thereof is preferably 0.3% or less, more preferably 0.1% or less, and most preferably not contained.

Specific examples of preferred glass composition of the present glass ceramic include, but are not limited to, the following.

A glass ceramic contains, in terms of molar percentage based on oxides:

55% to 85% of $SiO_2$;
1% to 5% of $Al_2O_3$;
0% to 5.0% of $B_2O_3$;
0.5% to 5.0% of $P_2O_5$;
0% to 5.0% of $TiO_2$;
0% to 5.0% of $ZrO_2$;
15% to 25% of $Li_2O$;
0% to 5.0% of $Na_2O$;
0% to 5.0% of $K_2O$; and
0% to 5.0% in total of one or more selected from MgO, CaO, SrO, and BaO.

In addition, from the viewpoint of further improving the chemical strengthening properties and the viewpoint of facilitating the presence of a heteroelement in the Li ion site of the lithium disilicate-based crystal, the following glass composition is more preferable.

A glass ceramic contains, in terms of molar percentage based on oxides:

55% to 85% of $SiO_2$;
1% to 5% of $Al_2O_3$;
0% to 5.0% of $B_2O_3$;
0.5% to 5.0% of $P_2O_5$;
0% to 5.0% of $TiO_2$;
0% to 5.0% of $ZrO_2$;
15% to 25% of $Li_2O$;
0.1% to 5.0% of $Na_2O$;
0% to 5.0% of $K_2O$; and
0% to 5.0% in total of one or more selected from MgO, CaO, SrO, and BaO.

(Physical Properties)

The relative dielectric constant Dk at 20°C and 10 GHz of the present glass ceramic is preferably 5.8 or less, more preferably 5.7 or less, still more preferably 5.6 or less, particularly preferably 5.5 or less, further particularly preferably 5.4 or less, even more preferably 5.3 or less, and most preferably 5.2 or less. When the relative dielectric constant Dk is small, loss of radio waves due to reflection on the glass surface can be suppressed, and thus the radio wave transmittance is prone to be good. A lower limit of the relative dielectric constant Dk is not particularly limited, but is typically 4.0 or more. The relative dielectric constant Dk may be, for example, 4.0 to 5.8.

A dielectric loss tangent $\tan \delta$ of the present glass ceramic at 20°C and 10 GHz is preferably 0.01 or less, more preferably 0.009 or less, still more preferably 0.008 or less, particularly preferably 0.007 or less, even more preferably 0.006 or less, and most preferably 0.0055 or less. When the dielectric loss tangent $\tan \delta$ is small, the loss when the radio wave passes through the inside of the glass can be suppressed, and thus the radio wave transmittance is prone to be good. A lower limit of the dielectric loss tangent is not particularly limited, but is typically 0.0005 or more. The dielectric loss tangent $\tan \delta$ may be, for example, 0.0005 to 0.01.

In the present glass ceramic, a total value of the relative dielectric constant Dk at 20°C and 10 GHz and a value $(\tan \delta \times 100)$ obtained by multiplying the dielectric loss tangent $\tan \delta$ at 20°C and 10 GHz by 100 is preferably 7.5 or less, more preferably 7.25 or less, further preferably 7.0 or less, still more preferably 6.75 or less, particularly preferably 6.5 or less, further particularly preferably 6.25 or less, even more preferably 6.0 or less, still even more preferably 5.9 or less, and most preferably 5.8 or less. Such a total value is a total value adjusted so that contribution degrees of the relative dielectric constant Dk and the dielectric loss tangent $\tan \delta$ are equal to each other. When the relative dielectric constant Dk and the dielectric loss tangent $\tan \delta$ are each small, the radio wave transmittance is improved, and therefore, it can be determined that the smaller such a total value is, the better the radio wave transmittance is. A lower limit of such a total value is not particularly limited, but is typically 4.5 or more. Such a total value may be, for example, 4.5 to 7.5.

It is preferable that values of the relative dielectric constant and the dielectric loss tangent at 20°C and 10 GHz and values of the relative dielectric constant and the dielectric loss tangent at higher frequencies are brought close to each other to reduce the frequency dependence (dielectric dispersion), whereby the frequency properties of the dielectric properties are less likely to change and the design change is small even when the frequencies at the time of use are different.

In the present glass ceramic, the crystal contained in the largest amount on a mass basis is a lithium disilicate-based crystal, and in the lithium disilicate-based crystal, the ratio of Li ions in Li ion sites is relatively small, so that the relative dielectric constant Dk and the dielectric loss tangent $\tan \delta$ at 20°C and 10 GHz are small, and the radio wave transmittance is excellent.

In general, the frequency dependence of the relative dielectric constant and the dielectric loss tangent of the glass is small in a frequency range of about 10 GHz to 40 GHz, and thus the present glass having excellent dielectric properties at 10 GHz is excellent in radio wave transmittance even in bands such as 28 GHz and 35 GHz used in 5G.

The relative dielectric constant and the dielectric loss tangent can be measured by a slip post dielectric resonance method (SPDR method) using a network analyzer.

The present glass ceramic preferably has high transparency particularly when used as a cover glass. The present glass ceramic has a parallel light transmittance in terms of a thickness of 0.7 mm of preferably 85% or more in a wavelength range of 400 nm to 1,000 nm, so that when the glass ceramic is used as a cover glass of a mobile display, a screen of the display is easily seen. The parallel light transmittance is more preferably 85.5% or more, further preferably 86% or more, still more preferably 86.5% or more, particularly preferably 87% or more, further particularly preferably 87.5% or more, further more preferably 88% or more, even more preferably 88.5% or more, still even more preferably 89% or more, yet still even more preferably 89.5% or more, extremely preferably 90% or more, and most preferably 90.5% or more. The higher the parallel light transmittance is, the more preferable it is, and typically, the parallel light transmittance is preferably 98% or less, more preferably 96% or less, still more preferably 95% or less, particularly preferably 94% or less, even more preferably 93.5% or less, still even more preferably 93% or less, and most preferably 92.5% or less. The parallel light transmittance in terms of a thickness of 0.7 mm may be, for example, 85% to 98%.

It is considered that when the parallel light transmittance of the glass ceramic having a sheet thickness of 0.75 mm or more is 85% or more, the parallel light transmittance in terms of a thickness of 0.7 mm is similarly 85% or more. In addition, in a case of a glass ceramic having a sheet thickness t larger than 0.7 mm, the sheet thickness may be adjusted to 0.7 mm by polishing, etching, or the like to actually measure the parallel light transmittance.

The present glass ceramic preferably has high transparency. The same applies to a case where the thickness of the present glass ceramic is not 0.7 mm, and the parallel light transmittance in a wavelength range of 400 nm to 1,000 nm is preferably 85% or more even in a case where the thickness is large, so that when the glass ceramic is used as a cover glass of a mobile display, the screen of the display is easily seen. For example, when the sheet thickness is preferably 0.7 mm or more, more preferably 0.8 mm or more, further preferably 0.9 mm or more, still more preferably 1.0 mm or more, particularly preferably 1.2 mm or more, even more preferably 1.5 mm or more, and most preferably 2.0 mm or more, the parallel light transmittance is preferably 85% or more. In general, the chemically strengthened glass is used with a thickness of 2.0 mm or less.

In addition, the haze value in terms of a thickness of 0.7 mm in the wavelength range of 400 nm to 1,000 nm is preferably less than 5%, more preferably 4% or less, further preferably 3% or less, still more preferably 2% or less, particularly preferably 1% or less, further particularly preferably 0.9% or less, further more preferably 0.8% or less, even more preferably 0.7% or less, still even more preferably 0.6% or less, yet still even more preferably 0.5% or less, extremely preferably 0.4% or less, and most preferably 0.3% or less. The smaller the haze value is, the more preferable it is. However, when the crystallization rate is decreased or a crystal particle size is reduced in order to decrease the haze value, the mechanical strength is prone to decrease. In order to increase the mechanical strength, the haze value in terms of a thickness of 0.7 mm is preferably 0.05% or more, more preferably 0.1% or more, still more preferably 0.15% or more, particularly preferably 0.2% or more, and even more preferably 0.25% or more. The haze value in terms of a thickness of 0.7 mm may be, for example, 0.05% or more and less than 5%. The haze value is a value measured in accordance with JIS K7136 (2000).

The haze value of the glass ceramic having a sheet thickness t [mm] can be calculated by the following procedure.

First, in a case where the total visible light transmittance of the glass ceramic having a sheet thickness t [mm] is $100 \times T$ [%] and a surface reflectance of one side is $100 \times R$ [%], $T = (1-R)^2 \times \exp(-\alpha t)$ is established using a constant $\alpha$ by referring to the Lambert-Beer law.

Here, if $\alpha$ is represented by R, T, and t, and t = 0.7 mm, R does not change depending on the sheet thickness, and thus the total visible light transmittance $T_{0.7}$ in terms of 0.7 mm can be calculated as $T_{0.7} = 100 \times T^{0.7/t}/(1-R)^{\wedge}(1.4/t-2)$ [%]. Here, "X^Y" represents "$X^Y$". In addition, the surface reflectance may be calculated based on a refractive index or may be actually measured.

Further, in a case where the total visible light transmittance of the glass ceramic having the sheet thickness t [mm] is $100 \times T$ [%] and the haze value is $100 \times H$ [%], $dH/dt \propto \exp(-\alpha t) \times (1-H)$ is established using the above constant $\alpha$ by referring to the Lambert-Beer law.

That is, since it is considered that the haze value increases in proportion to an internal linear transmittance as the sheet thickness increases, the haze value $H_{0.7}$ in a case of 0.7 mm is obtained by the following formula. Here, "X^Y" represents "$X^Y$".

$$H_{0.7} = 100 \times [1 - (1 - H)^{\wedge}\{((1 - R)^2 - T_{0.7})/((1 - R)^2 - T)\}] \ [\%]$$

In addition, in a case of a glass having a sheet thickness t larger than 0.7 mm, the sheet thickness may be adjusted to 0.7 mm by polishing, etching, or the like to actually measure the haze value.

The glass ceramic contains crystals and thus has high hardness. Therefore, it is less likely to be damaged and is excellent in wear resistance. The Vickers hardness is preferably 600 to 1,100. In order to increase the wear resistance, the Vickers hardness is preferably 600 or more, more preferably 650 or more, still more preferably 700 or more, particularly preferably 730 or more, even more preferably 750 or more, and most preferably 780 or more.

In a case where the hardness is extremely high, processing tends to be difficult, and therefore, the Vickers hardness of the glass ceramic is preferably 1,100 or less, more preferably 1,080 or less, still more preferably 1,060 or less, particularly preferably 1,050 or less, even more preferably 1,030 or less, and most preferably 1,000 or less.

The Young's modulus of the glass ceramic is preferably 85 GPa to 130 GPa. The Young's modulus is preferably 85 GPa or more, more preferably 90 GPa or more, still more preferably 93 GPa or more, particularly preferably 95 GPa or more, even more preferably 97 GPa or more, and most preferably 100 GPa or more, in order to suppress warpage due to strengthening during chemical strengthening. The glass ceramic may be used after being polished. For ease of polishing, the Young's modulus is preferably 130 GPa or less, more preferably 127 GPa or less, still more preferably 125 GPa or less, particularly preferably 123 GPa or less, and even more preferably 120 GPa or less.

It is preferable that a fracture toughness value of the glass ceramic is preferably $0.8 \ MPa \cdot m^{1/2}$ or more, more preferably $0.83 \ MPa \cdot m^{1/2}$ or more, still more preferably $0.85 \ MPa \cdot m^{1/2}$ or more, particularly preferably $0.87 \ MPa \cdot m^{1/2}$ or more, and even more preferably $0.9 \ MPa \cdot m^{1/2}$ or more, because broken pieces at the time of cracking are less likely to scatter when the glass ceramic is chemically strengthened. An upper limit of the fracture toughness value is not particularly limited, but is typically $1.5 \ MPa \cdot m^{1/2}$ or less. The fracture toughness value may be, for example, $0.8 \ MPa \cdot m^{1/2}$ to $1.5 \ MPa \cdot m^{1/2}$.

(Shape)

Although a shape of the present glass ceramic is not particularly limited, the shape is preferably, for example, a sheet shape. When the present glass ceramic has a sheet shape (glass sheet), a sheet thickness (t) thereof is preferably, for example, 0.1 mm to 2 mm. The sheet thickness (t) is, for example, 2 mm or less, preferably 1.5 mm or less, more preferably 1 mm or less, still more preferably 0.9 mm or less, further preferably 0.8 mm or less, particularly preferably 0.7 mm or less, and most preferably 0.6 mm or less, from the viewpoint of enhancing the chemical strengthening effect. In addition, the sheet thickness is, for example, preferably 0.1 mm or more, more preferably 0.2 mm or more, further preferably 0.3 mm or more, still more preferably 0.35 mm or more, particularly preferably 0.4 mm or more, and further particularly preferably 0.5 mm or more, from the viewpoint of obtaining an effect of sufficiently improving the strength by the chemical strengthening treatment.

The shape of the present glass ceramic may be a shape other than a sheet shape depending on a product to be applied, an application, or the like. In addition, the glass sheet may have an edged shape or the like in which a thickness of an outer periphery is different. In addition, a form of the glass sheet is not limited thereto, and for example, two main surfaces may not be parallel to each other. In addition, one or both of the two main surfaces may be entirely or partially curved. More specifically, the glass sheet may be, for example, a flat sheet-shaped glass sheet having no warpage or a curved glass sheet having a curved surface.

(Chemically Strengthened Glass)

A chemically strengthened glass according to an embodiment of the present invention (hereinafter, also referred to as "present chemically strengthened glass") is obtained by chemically strengthening the present glass ceramic described above. That is, base composition of the present chemically strengthened glass is the same as the glass composition of the present glass ceramic described above, and a preferred composition range is also the same. When the chemically strengthened glass has, for example, a sheet shape, a content ratio of an alkaline metal element differs between a surface layer and a center in the thickness direction. On the other hand, the glass composition in the deepest portion from the surface of the chemically strengthened glass is the same as the base composition of the chemically strengthened glass except for a case where an extreme ion exchange treatment is performed. When the chemically strengthened glass has a sheet shape, the deepest portion from the glass surface is, for example, a depth of 1/2 of the sheet thickness t.

The present chemically strengthened glass is, for example, a chemically strengthened glass including a compressive stress layer on a surface thereof, having a surface compressive stress value CS of 50 MPa or more, and being preferably a chemically strengthened glass which is the present glass ceramic described above.

The strength can be improved by chemically strengthening the present glass ceramic. In addition, it is considered that the crystal contained in the present chemically strengthened glass, the content thereof, and the ratio of Li ions in Li ion sites of the lithium disilicate-based crystal are the same as those of the present glass ceramic except for a case where an extreme ion exchange treatment or the like is performed. That is, the present chemically strengthened glass is excellent in radio wave transmittance for the same reason as the present glass ceramic. In addition, the present chemically strengthened glass is excellent in both strength and radio wave transmittance.

The present chemically strengthened glass preferably has a surface compressive stress value CS of 50 MPa to 400 MPa. CS is preferably 50 MPa or more, more preferably 60 MPa or more, further preferably 70 MPa or more, still more preferably 80 MPa or more, particularly preferably 90 MPa or more, further particularly preferably 100 MPa or more, even more preferably 110 MPa or more, still even more preferably 130 MPa or more, and most preferably 150 MPa or more.

The larger the surface compressive stress value CS is, the higher the strength is, but in a case where the surface compressive stress value CS is extremely large, a large tensile stress is generated inside the chemically strengthened glass, and there is a concern that breakage may occur. From such a viewpoint, the surface compressive stress value CS is preferably 400 MPa or less, more preferably 350 MPa or less, still more preferably 300 MPa or less, particularly preferably 250 MPa or less, even more preferably 225 MPa or less, and most preferably 200 MPa or less.

In a stress profile of the present chemically strengthened glass, the compressive stress value $CS_{50}$ at a depth of 50 $\mu$m from the surface is preferably 5 MPa to 100 MPa. $CS_{50}$ is preferably 5 MPa or more, more preferably 10 MPa or more, particularly preferably 15 MPa or more, even more preferably 20 MPa or more, and most preferably 25 MPa or more. When $CS_{50}$ is large, the chemically strengthened glass is hardly cracked at the time of being damaged by dropping or the like. $CS_{50}$ is preferably 100 MPa or less, more preferably 90 MPa or less, still more preferably 80 MPa or less, particularly preferably 70 MPa or less, further particularly preferably 60 MPa or less, even more preferably 50 MPa or less, and most preferably 40 MPa or less, from the viewpoint of preventing severe crushing.

An internal tensile stress value CT of the present chemically strengthened glass is preferably 5 MPa to 100 MPa. CT is preferably 100 MPa or less, more preferably 75 MPa or less, still more preferably 50 MPa or less, particularly preferably 40 MPa or less, even more preferably 30 MPa or less, and most preferably 20 MPa or less. When CT is small, crushing is less likely to occur. The internal tensile stress value CT is preferably 5 MPa or more, more preferably 10 MPa or more, particularly preferably 15 MPa or more, and even more preferably 17.5 MPa or more. When the CT is equal to or greater than the above value, a compressive stress in the vicinity of the surface increases, and the strength increases.

A depth of a compressive stress layer DOL of the present chemically strengthened glass is preferably 0.04t to 0.22t with respect to the thickness t (mm). In a case where DOL is extremely large with respect to the thickness t (mm), CT increases, and therefore, DOL is preferably 0.22t or less, further preferably 0.21t or less, still more preferably 0.20t or less, particularly preferably 0.19t or less, further particularly preferably 0.18t or less, even more preferably 0.16t or less, still even more preferably 0.14t or less, and most preferably 0.12t or less. In addition, DOL is preferably 0.04t or more, more preferably 0.05t or more, particularly preferably 0.06t or more, even more preferably 0.07t or more, still even more preferably 0.08t or more, and most preferably 0.09t or more, from the viewpoint of improving the strength. Specifically, for example, when the sheet thickness t is 0.7 mm, DOL is preferably 63 $\mu$m or less, more preferably 56 $\mu$m or less, and still more preferably 49 $\mu$m or less. In addition, DOL is preferably 28 $\mu$m or more, still more preferably 35 $\mu$m or more, and particularly preferably 42 $\mu$m or more. The preferred sheet thickness (t) and the preferred shape of the present chemically strengthened glass are the same as the preferred sheet thickness (t) and the preferred shape of the present glass ceramic described above.

<Method for Producing Glass Ceramic and Chemically Strengthened Glass>

The present chemically strengthened glass can be produced by subjecting the present glass ceramic described above to a chemical strengthening treatment. In addition, the present glass ceramic can be produced by subjecting an amorphous glass to a heat treatment to crystallize the amorphous glass.

(Production of Amorphous Glass)

The amorphous glass can be produced, for example, by the following method. The production method described below is an example in a case of producing a sheet-shaped glass ceramic and a sheet-shaped chemically strengthened glass.

In order to obtain a glass having preferred composition, glass raw materials are blended, and then heated and melted in a glass melting furnace. Thereafter, the molten glass is homogenized by bubbling, stirring, addition of a refining agent, or the like and formed into a glass sheet having a predetermined thickness by a known forming method, followed by being annealed. Alternatively, the molten glass may be formed into a block shape, annealed, and then cut into a sheet shape.

Here, preferred glass composition of the amorphous glass is the same as preferred glass composition of the glass ceramic described above.

(Crystallization Treatment)

The amorphous glass obtained by the above procedure is subjected to a heat treatment to obtain a glass ceramic

A method of the heat treatment is not particularly limited as long as the method includes subjecting the amorphous glass to at least one-stage heat treatment. The heat treatment is preferably performed by, for example, the following method.

The heat treatment may be a two-stage heat treatment in which the glass is held for a certain period of time (holding time t1) at a temperature raised from room temperature to a first treatment temperature T 1, and then is held for a certain period of time (holding time t2) at a second treatment temperature T2 that is higher than the first treatment temperature. Alternatively, the heat treatment may be a one-stage heat treatment in which the glass is held at a specific treatment temperature and then cooled to room temperature.

In the case of the two-stage heat treatment, the first treatment temperature T1 is preferably a temperature range in which a crystal nucleation rate increases in the glass composition, and the second treatment temperature T2 is preferably a temperature range in which a crystal growth rate increases in the glass composition. In addition, the holding time t1 at the first treatment temperature T1 is preferably a relatively long period of time so that a sufficient number of crystal nuclei are generated. When a large number of crystal nuclei are generated, a size of each crystal is reduced, and a glass ceramic having high transparency is easily obtained.

In the case of the two-stage heat treatment, the first treatment temperature T1 is preferably, for example, 450°C to 700°C, and the holding time t1 is preferably 1 hour to 6 hours. In addition, the second treatment temperature is preferably, for example, 600°C to 800°C, and the holding time t2 is preferably 1 hour to 6 hours. In the case of the one-stage treatment, the glass is preferably held at, for example, 500°C to 800°C for 1 hour to 6 hours.

In addition, a method of making the ratio of Li ions in the Li ion site of the lithium disilicate-based crystal relatively small is not particularly limited, but a method satisfying at least one of the following first condition and second condition is preferable.

As the first condition, the heat treatment is preferably performed at a relatively low temperature. Specifically, in the one-stage or multiple-stage heat treatment, the temperature of the heat treatment in each stage is preferably 750°C or lower, more preferably 740°C or lower, still more preferably 730°C or lower, and particularly preferably 720°C or lower. A preferable lower limit value of the temperature of the heat treatment is the same as that described above.

By setting the temperature of the heat treatment to a relatively low temperature, Li ions are less likely to move in the glass, and are less likely to be present in Li ion sites. Accordingly, it is possible to reduce the ratio of Li ions in Li ion sites.

As the second condition, it is preferable to relatively increase the heating rate and the cooling rate. That is, in the one-stage or multiple-stage heat treatment, the heating rate to each treatment temperature is preferably 0.5 °C/min to 100 °C/min. The heating rate is preferably 0.5 °C/min or more, more preferably 1 °C/min or more, still more preferably 2 °C/min or more, particularly preferably 3 °C/min or more, even more preferably 4 °C/min or more, and most preferably 5 °C/min or more. On the other hand, from the viewpoint of suppressing breakage of the glass, the heating rate is preferably 100 °C/min or less, more preferably 75 °C/min or less, still more preferably 50 °C/min or less, and particularly preferably 25 °C/min or less. When the heat treatment is performed in a plurality of stages, it is preferable that at least a part of the heating rate is in the above range, and it is more preferable that all the heating rates are in the above range. A preferred aspect of the cooling rate from each treatment temperature is the same as a preferred aspect of the heating rate.

By relatively increasing the heating rate and the cooling rate, Li ions are less likely to move in the glass during heating or cooling of the glass, and are less likely to be present in the Li ion sites. Accordingly, it is possible to reduce the ratio of Li ions in Li ion sites.

The molten glass may be homogenized and formed into a glass sheet having a predetermined thickness, or the molten glass may be formed into a block shape and then continuously subjected to a crystallization treatment.

When the sheet-shaped glass is subjected to the heat treatment, examples of a setter board include a silicon carbide board, a silicon nitride board, a SiN board, an alumina board, a mullite cordierite board, a mullite board, and a glass ceramic board. In addition, in order to reduce temperature unevenness during heat treatment, a material having high thermal conductivity is preferable. A thermal conductivity of the setter board is preferably 2 W/(m·K) or more, more preferably 20 W/(m·K) or more, and still more preferably 40 W/(m·K) or more.

A release agent can be used to prevent the glass from adhering to the setter board. Examples of the release agent include alumina cloth and glass cloth. In addition, for example, powdery boron nitride, alumina, or mineral may be used. The release agent in a powder form may be mixed with a solvent and applied by spraying or the like. When a particulate release agent is used, an average particle size thereof is preferably 80 $\mu$m or less, more preferably 50 $\mu$m or less, and still more preferably 30 $\mu$m or less.

The glass may be laminated in order to improve working efficiency when being subjected to the heat treatment. In a case of lamination, a release agent is preferably used between a glass and a glass. In addition, a setter board may be placed between a glass and a glass.

The glass ceramic obtained by the above procedure is subjected to grinding and polishing as necessary to form a glass ceramic sheet. If the glass ceramic sheet is cut into a predetermined shape and size or subjected to chamfering, It is preferable to cut the glass ceramic sheet or perform chamfering before the chemical strengthening treatment is performed because a compressive stress layer is also formed on an end surface by a subsequent chemical strengthening treatment.

(Chemical Strengthening Treatment)

The chemical strengthening treatment is a treatment in which a glass is brought into contact with a metal salt by a method such as immersion in a molten solution of the metal salt (for example, potassium nitrate) containing metal ions having a large ion radius, so that metal ions having a small ion radius in the glass are substituted with the metal ions having a large ion radius. Here, the metal ions having a small ion radius are typically Na ions or Li ions. The metal ions having a large ion radius are typically Na ions or K ions, more specifically, Na ions or K ions for Li ions, and K ions for Na ions.

In order to increase a rate of the chemical strengthening treatment, it is preferable to use "Li-Na exchange" in which Li ions in the glass are exchanged with Na ions. In addition, in order to form a large compressive stress by ion exchange, it is preferable to use "Na-K exchange" in which Na ions in the glass are exchanged with K ions.

Examples of the molten salt for performing the chemical strengthening treatment include a nitrate, a sulfate, a carbonate, and a chloride. Examples of the nitrate include lithium nitrate, sodium nitrate, potassium nitrate, cesium nitrate, and silver nitrate. Examples of the sulfate include lithium sulfate, sodium sulfate, potassium sulfate, cesium sulfate, and silver sulfate. Examples of the carbonate include lithium carbonate, sodium carbonate, and potassium carbonate. Examples of the chloride include lithium chloride, sodium chloride, potassium chloride, cesium chloride, and silver chloride. These molten salts may be used alone or in combination.

As the treatment conditions of the chemical strengthening treatment, time, temperature, and the like may be selected in consideration of the glass composition, the type of molten salt, and the like. For example, the present glass ceramic is preferably subjected to the chemical strengthening treatment at preferably 450°C or lower for preferably 1 hour or shorter. Specifically, for example, a treatment of immersion in a molten salt (for example, a mixed salt of lithium nitrate and sodium nitrate) preferably containing 0.3 mass% of Li and 99.7 mass% of Na at preferably 450°C for preferably about 0.5 hours is exemplified.

The chemical strengthening treatment may be, for example, two-stage ion exchange as follows. First, the present glass ceramic is immersed in a metal salt containing Na ions (for example, sodium nitrate) at preferably about 350°C to 500°C for preferably about 0.1 hours to 10 hours. This causes ion exchange between Li ions in the glass ceramic and Na ions in the metal salt, thereby forming a relatively deep compressive stress layer

Next, the present glass ceramic is immersed in a metal salt (for example, potassium nitrate) containing K ions at preferably about 350°C to 500°C for preferably about 0.1 hours to 10 hours. Accordingly, a large compressive stress is generated in a portion of the compressive stress layer formed in the previous process, for example, within a depth of about 10 μm. By such a two-stage treatment, a stress profile having a large surface compressive stress value is easily obtained.

(Application)

The present invention relates to an electronic device including the present glass ceramic or the present chemically strengthened glass described above. That is, the present glass ceramic and the present chemically strengthened glass can implement both high strength and radio wave transmittance, and thus are useful as a cover glass or a circuit board used in an electronic device. The present glass ceramic and the present chemically strengthened glass are particularly useful as a cover glass for use in a mobile device such as a mobile phone, a smart phone, a personal digital assistant (PDA), and a tablet terminal. Further, the present glass ceramic and the present chemically strengthened glass are also useful for applications which are not intended to be carried such as a cover glass of a display device such as a television (TV), a personal computer (PC), and a touch panel, an elevator wall surface, or a wall surface (full-screen display) of a construction such as a house and a building, a building material such as a window glass, a table top, an interior of an automobile, an airplane, or the like, and a cover glass thereof, or a casing having a curved surface shape that is not a sheet shape by bending or forming.

EXAMPLES

Hereinafter, the present disclosure will be described in detail with reference to Examples, but the present disclosure is not limited thereto.

Glass raw materials were mixed so as to have a composition shown in Table 1 in terms of a molar percentage based on oxides, and weighed out to obtain 400 g of a glass. Then, the mixed raw materials were put in a platinum crucible, put into an electric furnace at 1,500°C to 1,700°C, melted for about 3 hours, defoamed, and homogenized.

The obtained molten glass was poured into a metal mold, held at a temperature of approximately 50°C higher than a glass transition point for 1 hour, and then cooled to the room temperature at a rate of 0.5 °C/min, thereby obtaining a glass block. The obtained glass block was cut, ground, and finally mirror-polished on both surfaces to obtain a glass sheet having a thickness of 2 mm (amorphous glass 1 to amorphous glass 9).

Each obtained amorphous glass was subjected to a heat treatment. That is, the amorphous glasses 1 to 9 were first heated to the first treatment temperature T1 at the heating rate described in Table 2. Then, the glass was held at the first treatment temperature T1 for the holding time t1, thereby being subjected to the first-stage heat treatment. By the first-stage heat treatment, crystal nuclei were formed over an entire volume of the starting glass. After the first-stage heat treatment, a precursor (amorphous glass after first-stage heat treatment) was heated to the second treatment temperature T2 at the heating rate shown in Table 2. Then, the glass was held at the second treatment temperature T2 for the holding time t2, thereby being subjected to the second-stage heat treatment. Crystals grew by the second-stage heat treatment and the crystallization rate increased. Thereafter, the temperature was lowered to room temperature at a cooling rate described in Table 2.

The amorphous glass shown in Table 1 was subjected to a heat treatment under the conditions shown in Table 2 to obtain glass ceramics according to Examples 1 to 9. In addition, physical properties described in Table 2 were obtained from the obtained glass ceramics. The glass ceramics according to Examples 1 to 7 are inventive examples, and the glass ceramics according to Examples 8 and 9 are comparative examples.

Methods of measuring physical properties were shown below.

(Measurement of Haze Value and Parallel Light Transmittance)

The obtained amorphous glass and glass ceramic were processed into a rectangular parallelepiped having a length of 30.0 mm, a width of 30.0 mm, and a thickness of 0.7 mm, and surfaces of 30.0 mm × 30.0 mm were mirror-polished. Measurement was performed using a haze meter HZ-V3 manufactured by Suga Test Instruments Co., Ltd..

(Measurement of Radio Wave Transmittance of Glass Ceramic)

The glass ceramic was processed into a rectangular parallelepiped having a length of 30.0 mm, a width of 30.0 mm, and a thickness of 0.5 mm, and surfaces of 30.0 mm × 30.0 mm were mirror-polished. The relative dielectric constant Dk and the dielectric loss tangent tan δ at 20°C and 10 GHz were measured using a network analyzer by a slip post dielectric resonance method (SPDR method).

(Chemical Strengthening Properties)

In addition, each glass ceramic was immersed in a salt of 100% sodium nitrate at 450°C for 1 hour and was subjected to chemical strengthening. The surface compressive stress value CS and the compressive stress depth DOL after the chemical strengthening were measured using a scattered light photoelastic stress meter SLP-1000 manufactured by Orihara Industrial Co., Ltd.

(PXRD Measurement of Glass Ceramic)

The obtained glass ceramic was subjected to PXRD measurement by the following procedure to identify crystal types.

(Preparation Conditions of PXRD Measurement Sample)

The glass ceramic sheet subjected to the SPDR method was pulverized using an agate mortar and an agate pestle, thereby obtaining a powder for PXRD measurement.

(PXRD Measurement Conditions)

Powder X-ray diffraction was measured under the following conditions to identify precipitated crystals.
For identification of crystal types, a diffraction peak pattern recorded in an ICSD inorganic crystal structure database and an ICDD powder diffraction database was used.

Measurement device: SmartLab manufactured by Rigaku Corporation
Measurement method: concentration method
Tube voltage: 45 kV
Tube current: 200 mA
X-ray used: CuKα ray
Measurement range: $2\theta = 10°$ to $80°$
Speed: 10 °/min
Step: 0.02°

(Preparation Conditions of Rietveld Measurement Sample)

After a glass ceramic powder used in the PXRD measurement was passed through a mesh having an opening of 500 μm, ZnO was added as a standard substance so as to be 10 mass% of the entire sample.

(Rietveld Analysis Conditions)

The powder X-ray diffraction was measured under the following conditions, and the Rietveld analysis was performed using obtained results.

Measurement device: SmartLab manufactured by Rigaku Corporation
Measurement method: concentration method
Tube voltage: 45 kV
Tube current: 200 mA
X-ray used: CuKα ray
Measurement range: $2\theta = 10°$ to $90°$
Speed: 5 °/min
Step: 0.01°

A powder X-ray diffraction profile obtained under the above conditions was analyzed using a Rietveld analysis program: Rietan FP. The analysis of each sample was converged so that Rwp representing quality of analysis convergence was 10 or less. The Rietveld method is described in "Crystal Analysis Handbook" edited by the Crystallographic Society of Japan "Crystal Analysis Handbook" Editing Committee (Kyoritsu Shuppan, 1999, p492-499).

(Calculation of Precipitation Ratio of Each Crystal and Ratio of Li Ion in Li Ion Site)

A precipitation ratio (content ratio) of each crystal was calculated so that the added 10 mass% of ZnO was subtracted from a weight ratio of the crystal phase obtained by Rietveld analysis and a remaining glass phase obtained by subtracting the content of the crystal phase from a total amount of the measurement sample, and a total content of the remaining phase was 100 mass%. In addition, a total of the precipitation ratio of each crystal represents the degree of crystallinity of the glass ceramic.

In addition, the ratio of Li ions in Li ion sites of the lithium disilicate-based crystal was calculated using an atomic occupancy of Li obtained by Rietveld analysis.

Table 1

| (mol%) | Amorphous glass 1 | Amorphous glass 2 | Amorphous glass 3 | Amorphous glass 4 | Amorphous glass 5 | Amorphous glass 6 | Amorphous glass 7 | Amorphous glass 8 | Amorphous glass 9 |
|---|---|---|---|---|---|---|---|---|---|
| $SiO_2$ | 70.0 | 73.1 | 71.9 | 71.0 | 72.6 | 72.0 | 71.0 | 63.9 | 61.0 |
| $Al_2O_3$ | 4.3 | 4.5 | 4.3 | 4.5 | 4.5 | 4.5 | 4.5 | 1.8 | 1.8 |
| $B_2O_3$ | 0.2 | 0.0 | 0.2 | 0.0 | 0.0 | 0.0 | 0.0 | 0.0 | 0.0 |
| $P_2O_5$ | 0.8 | 0.8 | 0.8 | 0.8 | 0.8 | 0.8 | 0.8 | 1.2 | 1.2 |
| $SrO$ | 0.0 | 0.0 | 0.0 | 0.0 | 0.0 | 0.0 | 2.1 | 0.0 | 0.0 |
| $TiO_2$ | 0.0 | 0.0 | 0.0 | 2.1 | 0.0 | 0.0 | 0.0 | 0.0 | 0.0 |
| $ZrO_2$ | 2.1 | 0.0 | 0.0 | 0.0 | 0.2 | 0.9 | 0.0 | 4.7 | 4.7 |
| $Li_2O$ | 20.3 | 21.2 | 21.4 | 21.2 | 21.2 | 21.2 | 21.2 | 26.7 | 29.6 |
| $Na_2O$ | 2.3 | 0.3 | 1.5 | 0.3 | 0.5 | 0.5 | 0.3 | 0.0 | 0.0 |
| $K_2O$ | 0.0 | 0.1 | 0.0 | 0.1 | 0.1 | 0.1 | 0.1 | 1.8 | 1.8 |
| Sum | 100.0 | 100.0 | 100.0 | 100.0 | 100.0 | 100.0 | 100.0 | 100.0 | 100.0 |

Table 2

| Glass Ceramic | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Number of amorphous glass | 1 | 2 | 3 | 4 | 5 | 6 | 7 | 8 | 9 |
| Crystallization condition | | | | | | | | | |
| Heating rate to T1 [K/min] | 5 | 5 | 5 | 5 | 5 | 5 | 5 | 5 | 5 |
| Temperature T1 [°C] | 600 | 600 | 550 | 590 | 570 | 590 | 565 | 650 | 650 |
| Holding time t1 [h] | 4.0 | 4.0 | 4.0 | 4.0 | 4.0 | 4.0 | 4.0 | 0.3 | 0.3 |
| Heating rate to T2 [K/min] | 5 | 5 | 5 | 5 | 5 | 5 | 5 | 5 | 5 |
| Temperature T2 [°C] | 710 | 710 | 700 | 640 | 680 | 695 | 640 | 850 | 850 |
| Holding time t2 [h] | 4.0 | 4.0 | 4.0 | 4.0 | 4.0 | 4.0 | 4.0 | 0.2 | 1.0 |
| Cooling rate to room temperature [K/min] | 5 | 5 | 5 | 5 | 5 | 5 | 5 | 5 | 5 |
| Haze value [%] | 0.2 | 0.3 | 0.7 | 1.4 | 0.3 | 0.3 | 0.3 | 90.8 | 95.1 |
| Parallel light transmittance [%] | 90.9 | 90.5 | 89.3 | 87.7 | 90.7 | 90.6 | 90.4 | 5.2 | 1.3 |
| Precipitated crystal ratio (mass%) | | | | | | | | | |
| Lithium disilicate-based | 40% | 50% | 60% | 50% | 60% | 55% | 60% | 45% | 40% |
| Petalite-based | 30% | 25% | 20% | 20% | 20% | 20% | 25% | 0% | 0% |
| $SiO_2$-based | 0% | 0% | 0% | 0% | 0% | 0% | 0% | 0% | 0% |
| Lithium metasilicate-based | 0% | 0% | 0% | 0% | 0% | 0% | 0% | 0% | 10% |
| Ratio of Li ion in Li ion site | 70.5% | 55.0% | 76.5% | 78.5% | 71.1 % | 86.4% | 79.2% | 100.0% | 100.0% |
| Property | | | | | | | | | |
| CS [MPa] | 100 | 80 | 60 | 110 | 90 | 95 | 160 | 200 | |
| DOL [μm] | 90 | 70 | 70 | 90 | 90 | 75 | 50 | 60 | |
| Relative dielectric constant Dk@20°C, 10 GHz | 5.71 | 5.19 | 5.25 | 5.52 | 5.18 | 5.33 | 5.36 | 6.58 | 6.63 |

(continued)

| Property | | | | | | | | | |
|---|---|---|---|---|---|---|---|---|---|
| Dielectric loss tangent tan $\delta$ @20°C, 10 GHz | 0.0060 | 0.0060 | 0.0053 | 0.0059 | 0.0056 | 0.0052 | 0.0056 | 0.0101 | 0.0113 |
| Dk + (tan $\delta$ × 100) @20°C, 10 GHz | 6.3095 | 5.7860 | 5.7830 | 6.1100 | 5.7400 | 5.8500 | 5.9230 | 7.5873 | 7.7618 |

In the tables, a blank indicates that the physical property value of the item is not measured. A precipitated crystal ratio in the table indicates the precipitation ratio (content ratio) of each crystal calculated using Rietveld analysis in terms of mass percentage relative to the total amount of the glass ceramic. In addition, the "ratio of Li ions in Li ion sites" represents the ratio of Li ions in Li ion sites of a lithium disilicate-based crystal.

CS and DOL in the table represent the surface compressive stress value CS and the compressive stress depth DOL of the chemically strengthened glass subjected to the above-described chemical strengthening for each glass ceramic, respectively.

In addition, in the glass ceramics according to Examples 1 to 7, which are inventive examples, the ratio of Li ions in Li ion sites of the lithium disilicate-based crystal is less than 95%. As a result, it is confirmed that in the glass ceramics according to Examples 1 to 7, the total value of the relative dielectric constant Dk and the value obtained by multiplying the dielectric loss tangent tan $\delta$ by 100 at 20°C and 10 GHz in the samples after crystallization is a very good value of 7.5 or less, and good radio wave transmittance is achieved. In addition, in the glass ceramics according to Examples 1 to 7, a compressive stress of 50 MPa or more can be provided to a surface layer by chemical strengthening. That is, the glass ceramics according to Examples 1 to 7 have excellent chemical strengthening properties and can impart a high strength by chemical strengthening.

In addition, in the glass ceramics according to Examples 8 and 9, which are comparative examples, the ratio of Li ions in Li ion sites of the lithium disilicate-based crystal is 100.0%. As a result, the glass ceramics according to Examples 8 and 9 have a very large total value of the relative dielectric constant Dk and the value obtained by multiplying the dielectric loss tangent tan $\delta$ by 100 at 20°C and 10 GHz in the samples after crystallization of more than 7.5, and are inferior in terms of radio wave transmittance.

As described above, the following matters are disclosed in the present description.

1. A glass ceramic, in which

a crystal contained in the largest amount on a mass basis is a lithium disilicate-based crystal, and
a ratio of Li ions in Li ion sites of the lithium disilicate-based crystal is less than 95%.

2. The glass ceramic according to 1, having a light transmittance in terms of a thickness of 0.7 mm of 85% or more in a wavelength range of 400 nm to 1,000 nm.

3. The glass ceramic according to 1 or 2, having a haze value in terms of a thickness of 0.7 mm of less than 5% in a wavelength range of 400 nm to 1,000 nm.

4. The glass ceramic according to any one of 1 to 3, in which
a total value of a relative dielectric constant Dk at 10 GHz and 20°C and a value obtained by multiplying a dielectric loss tangent tan $\delta$ at 10 GHz and 20°C by 100 is 7.5 or less.

5. The glass ceramic according to any one of 1 to 4, having a relative dielectric constant Dk at 10 GHz and 20°C of 5.8 or less.

6. The glass ceramic according to any one of 1 to 5, including, in terms of molar percentage based on oxides:

55% to 85% of $SiO_2$;
1% to 5% of $Al_2O_3$;
0% to 5.0% of $B_2O_3$;
0.5% to 5.0% of $P_2O_5$;

0% to 5.0% of $TiO_2$;
0% to 5.0% of $ZrO_2$;
15% to 25% of $Li_2O$;
0% to 5.0% of $Na_2O$;
0% to 5.0% of $K_2O$; and
0% to 5.0% in total of one or more selected from MgO, CaO, SrO, and BaO.

7. The glass ceramic according to 6, including, in terms of molar percentage based on an oxide:
0.1% to 5.0% of $Na_2O$.

8. A method for producing the glass ceramic according to any one of 1 to 7, the method including:

subjecting an amorphous glass to at least a one-stage heat treatment, in which
a temperature of each of the heat treatment is 750°C or lower, and
a heating rate to a treatment temperature and a cooling rate from the treatment temperature are 0.5 °C/min or more in each of the heat treatment.

9. A chemically strengthened glass including a compressive stress layer on a surface thereof,

having a surface compressive stress value of 50 MPa or more, and
being the glass ceramic according to any one of 1 to 7.

10. The chemically strengthened glass according to 9, having a sheet shape, in which
a ratio of an alkaline metal element is different between a surface layer and a center in a thickness direction.

11. An electronic device including the glass ceramic according to any one of 1 to 7 or the chemically strengthened glass according to 9 or 10.

Although the present invention has been described in detail with reference to specific embodiments, it is apparent to those skilled in the art that various changes and modifications can be made without departing from the spirit and scope of the present invention.
The present application is based on a Japanese Patent Application (No. 2021-143384) filed on September 2, 2021, the contents of which are incorporated herein by reference.

INDUSTRIAL APPLICABILITY

The present glass ceramic and the present chemically strengthened glass can implement both high strength by chemical strengthening and high radio wave transmittance, and thus are useful as a cover glass or a circuit board used in an electronic device. The present glass ceramic and the present chemically strengthened glass are particularly useful as a cover glass for use in a mobile device such as a mobile phone, a smart phone, a personal digital assistant (PDA), and a tablet terminal. Further, the present glass ceramic and the present chemically strengthened glass are also useful for applications which are not intended to be carried such as a cover glass of a display device such as a television (TV), a personal computer (PC), and a touch panel, an elevator wall surface, or a wall surface (full-screen display) of a construction such as a house and a building, a building material such as a window glass, a table top, an interior of an automobile, an airplane, or the like, and a cover glass thereof, or a casing having a curved surface shape that is not a sheet shape by bending or forming.

**Claims**

1.  A glass ceramic, wherein

a crystal contained in the largest amount on a mass basis is a lithium disilicate-based crystal, and
a ratio of Li ions in Li ion sites of the lithium disilicate-based crystal is less than 95%.

2.  The glass ceramic according to claim 1, having a light transmittance in terms of a thickness of 0.7 mm of 85% or more in a wavelength range of 400 nm to 1,000 nm.

3. The glass ceramic according to claim 1 or 2, having a haze value in terms of a thickness of 0.7 mm of less than 5% in a wavelength range of 400 nm to 1,000 nm.

4. The glass ceramic according to claim 1 or 2, wherein
   a total value of a relative dielectric constant Dk at 10 GHz and 20°C and a value obtained by multiplying a dielectric loss tangent tan $\delta$ at 10 GHz and 20°C by 100 is 7.5 or less.

5. The glass ceramic according to claim 1 or 2, having a relative dielectric constant Dk at 10 GHz and 20°C of 5.8 or less.

6. The glass ceramic according to claim 1 or 2, comprising, in terms of molar percentage based on oxides:

   55% to 85% of $SiO_2$;
   1% to 5% of $Al_2O_3$;
   0% to 5.0% of $B_2O_3$;
   0.5% to 5.0% of $P_2O_5$;
   0% to 5.0% of $TiO_2$;
   0% to 5.0% of $ZrO_2$;
   15% to 25% of $Li_2O$;
   0% to 5.0% of $Na_2O$;
   0% to 5.0% of $K_2O$; and
   0% to 5.0% in total of one or more selected from MgO, CaO, SrO, and BaO.

7. The glass ceramic according to claim 6, comprising, in terms of molar percentage based on an oxide:
   0.1% to 5.0% of $Na_2O$.

8. A method for producing the glass ceramic according to claim 1 or 2, the method comprising:

   subjecting an amorphous glass to at least a one-stage heat treatment, wherein
   a temperature of each of the heat treatment is 750°C or lower, and
   a heating rate to a treatment temperature and a cooling rate from the treatment temperature are 0.5 °C/min or more in each of the heat treatment.

9. A chemically strengthened glass comprising a compressive stress layer on a surface thereof,

   having a surface compressive stress value of 50 MPa or more, and
   being the glass ceramic according to claim 1 or 2.

10. The chemically strengthened glass according to claim 9, having a sheet shape, wherein
    a ratio of an alkaline metal element is different between a surface layer and a center in a thickness direction.

11. An electronic device comprising the glass ceramic according to claim 1.

## INTERNATIONAL SEARCH REPORT

| International application No. |
|---|
| **PCT/JP2022/032466** |

| **A.** | **CLASSIFICATION OF SUBJECT MATTER** |
|---|---|

*C03C 10/04*(2006.01)i; *C03B 32/02*(2006.01)i; *C03C 21/00*(2006.01)i
FI:  C03C10/04; C03B32/02; C03C21/00 101

According to International Patent Classification (IPC) or to both national classification and IPC

| **B.** | **FIELDS SEARCHED** |
|---|---|

Minimum documentation searched (classification system followed by classification symbols)

C03C1/00 -14/00; C03B32/02; C03C21/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2020/018393 A1 (CORNING INCORPORATED) 23 January 2020 (2020-01-23) claims 1, 16, paragraphs [0002], [0005], [0279], [0295], [0381]-[0383], [0410], [0486], [0490]-[0492], [0496]-[0498], table 3, compositions 1, 3, 4, 6, 7, table 7, samples 5-7, 12-14, 15, table 10, table 11, cycle A, B, fig. 57A, 57B, 58, 61 | 1-11 |
| X | JP 2001-097740 A (NGK INSULATORS LTD) 10 April 2001 (2001-04-10) claims 1, 5-6, paragraphs [0001], [0032]-[0036], [0041]-[0045], tables 1-4, examples 3, 5, comparative examples 1, 2, 4 | 1, 4-6, 8 |
| Y | | 11 |
| A | | 2-3, 7, 9-10 |
| X | JP 2000-119042 A (OHARA INC) 25 April 2000 (2000-04-25) claims 1, 5-6, paragraphs [0001], [0033]-[0038], [0040], [0042], [0045]-[0046], tables 2, 4, examples 1, 7, fig. 10, 11 | 1, 6, 11 |
| Y | | 11 |
| A | | 2-5, 7-10 |

☑ Further documents are listed in the continuation of Box C. | ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 397 637 A1**

<table>
<tr><td colspan="2" style="text-align:center"><strong>INTERNATIONAL SEARCH REPORT</strong></td><td>International application No.</td></tr>
<tr><td colspan="2"></td><td><strong>PCT/JP2022/032466</strong></td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | JP 2017-501098 A (IVOCLAR VIVADENT AG) 12 January 2017 (2017-01-12)<br>entire text, all drawings | 1-11 |
| A | JP 2016-124723 A (ASAHI GLASS CO LTD) 11 July 2016 (2016-07-11)<br>entire text, all drawings | 1-11 |
| A | JP 2014-148461 A (ASAHI GLASS CO LTD) 21 August 2014 (2014-08-21)<br>entire text, all drawings | 1-11 |
| A | JP 2018-526317 A (IVOCLAR VIVADENT AG) 13 September 2018 (2018-09-13)<br>entire text, all drawings | 1-11 |
| A | JP 2013-515659 A (FRAUNHOFER-GESELLSCHAFT ZUR FOERDERUNG DER ANGEWANDTEN FORSCHUNG E.V) 09 May 2013 (2013-05-09)<br>entire text, all drawings | 1-11 |

Form PCT/ISA/210 (second sheet) (January 2015)

## INTERNATIONAL SEARCH REPORT
### Information on patent family members

International application No.

**PCT/JP2022/032466**

| Patent document cited in search report | | | Publication date (day/month/year) | Patent family member(s) | | | Publication date (day/month/year) |
|---|---|---|---|---|---|---|---|
| WO | 2020/018393 | A1 | 23 January 2020 | US | 2020/0017398 | A1 | |
| | | | | claims 1, 16, paragraphs [0002], [0005], [0279], [0296], [0399], [0427], [0507], [0510]-[0511], [0513], table 3, compositions 1, 3-4, 6-7, table 7, samples 5-7, 12-14, 45, table 10, table 11, cycle A, B, fig. 57A, 57B, 58, 61 | | | |
| | | | | JP | 2021-531229 | A | |
| | | | | EP | 3823935 | A1 | |
| | | | | KR | 10-2021-0081321 | A | |
| | | | | CN | 113195424 | A | |
| | | | | TW | 202005925 | A | |
| JP | 2001-097740 | A | 10 April 2001 | US | 6284340 | B1 | |
| | | | | claims 1, 5-6, column 1, lines 7-9, column 5, lines 5-36, column 7, lines 41-44, tables 1-4, examples 3, 5, comparative examples 1-2, 4 | | | |
| JP | 2000-119042 | A | 25 April 2000 | US | 6395368 | B1 | |
| | | | | claims 1, 5-6, column 1, lines 10-26, column 9, lines 8-56, column 11, lines 55 to column 12, line 9, tables 2, 4, examples 1, 7 | | | |
| | | | | EP | 1074523 | A2 | |
| | | | | TW | 541288 | B | |
| | | | | CN | 1251355 | A | |
| JP | 2017-501098 | A | 12 January 2017 | US | 2016/0236971 | A1 | |
| | | | | whole document | | | |
| | | | | WO | 2015/067643 | A1 | |
| | | | | EP | 2868634 | A1 | |
| | | | | KR | 10-2016-0078995 | A | |
| | | | | CN | 105683110 | A | |
| JP | 2016-124723 | A | 11 July 2016 | (Family: none) | | | |
| JP | 2014-148461 | A | 21 August 2014 | US | 2014/0194270 | A1 | |
| | | | | whole document | | | |
| | | | | WO | 2013/011897 | A1 | |
| | | | | TW | 201307099 | A | |
| JP | 2018-526317 | A | 13 September 2018 | US | 2018/0244564 | A1 | |
| | | | | whole document | | | |
| | | | | WO | 2017/032745 | A1 | |
| | | | | EP | 3135641 | A1 | |
| | | | | CA | 2995309 | A | |
| | | | | KR | 10-2018-0043335 | A | |
| JP | 2013-515659 | A | 09 May 2013 | US | 2012/0309607 | A1 | |
| | | | | whole document | | | |
| | | | | WO | 2011/076422 | A1 | |
| | | | | EP | 2516342 | A1 | |
| | | | | CA | 2785348 | A | |
| | | | | KR | 10-2012-0130088 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020033262 A

- JP 2021143384 A

**Non-patent literature cited in the description**

- Crystal Analysis Handbook

- Crystal Analysis Handbook. Kyoritsu Shuppan, 1999, 492-499